# EUROPEAN PATENT APPLICATION

(11) **EP 4 657 844 A1**
(43) Date of publication of application: **03.12.2025**
(21) Application number: 24747269.9
(22) Date of filing: 22.01.2024
(51) Int. Cl.: H04N 7/18, G06T 7/00, G08B 13/196, G08B 25/00

(54) **SENSING METHOD AND CAMERA**

(30) Priority: 23.01.2023 JP 2023008169
(71) Applicant: i-PRO Co., Ltd., Tokyo 108-6014 (JP)
(72) Inventor: HAMABE, Ryoji, Tokyo 108-6014 (JP); KANDA KUWAHARA, Marie, Tokyo 108-6014 (JP); SHIMADA, Takeshi, Tokyo 108-6014 (JP); YAMAHATA, Toshihiko, Tokyo 108-6014 (JP)
(74) Representative: Eisenführ Speiser
(86) International application number: PCT/JP2024/001704
(87) International publication number: WO 2024/157942

(57) **Abstract**

This sensing method is performed by a camera that captures an image of at least one sensing region. In this sensing method: an image of a region including a sensing region is captured; a non-object to be sensed and an object to be sensed in the captured image are sensed; a sensing continuation time for the object to be sensed in the sensing region is measured on the basis of a non-sensing pixel in which the non-object to be sensed is sensed and a sensing pixel in which the object to be sensed is sensed; and, if it is determined that the sensing continuation time is greater than or equal to a predetermined time, an alarm indicating that the object to be sensed has been sensed in the sensing region is generated and output.

## Description

### TECHNICAL FIELD

The present disclosure relates to a detection method and a camera.

### BACKGROUND ART

Patent Literature 1 discloses a monitoring device that thins an image captured by a monitoring camera using a trained monitoring logic, transmits the thinned image to a learning device that trains another monitoring logic of the same type as the monitoring logic, receives the other monitoring logic additionally trained by the learning device from the learning device, and updates the monitoring logic to the other monitoring logic. The monitoring device uses the monitoring logic to generate a determination result together with a certainty factor of the determination as to whether an imaging region of an image is normal or abnormal.

### CITATION LIST

### PATENT LITERATURE

Patent Literature 1: JP2022-55229A

### SUMMARY OF INVENTION

### TECHNICAL PROBLEM

However, in the determination as to whether the imaging region is normal or abnormal, the imaging region may be erroneously determined to be abnormal when an object (for example, a person) other than a target subject enters the imaging region based on the object other than the target subject even though no abnormality occurs in the imaging region.

The present disclosure is made in view of the above-described circumstance in the related art, and an object thereof is to provide a detection method and a camera that more effectively prevent erroneous detection of an abnormality in a monitoring region due to an obstacle.

### SOLUTION TO PROBLEM

The present disclosure provides a detection method executed by a camera that captures an image of at least one detection region, the detection method including: capturing an image of a region including the detection region; detecting a non-detection target and a detection target appearing in the captured image; measuring detection duration of the detection target in the detection region based on non-detection pixels in which the non-detection target is detected and detection pixels in which the detection target is detected; and generating and outputting an alarm indicating that the detection target is detected in the detection region when the detection duration is determined to be equal to or longer than a prescribed time.

The present disclosure further provides a camera including: an imaging unit configured to capture an image of a region including at least one detection region; a first detection unit configured to detect a non-detection target appearing in the captured image; a second detection unit configured to detect a detection target appearing in the captured image; a measurement unit configured to measure detection duration of the detection target in the detection region based on non-detection pixels in which the non-detection target is detected and detection pixels in which the detection target is detected; and a control unit configured to generate and output an alarm indicating that the detection target is detected in the detection region when the detection duration is determined to be equal to or longer than a prescribed time.

### ADVANTAGEOUS EFFECTS OF INVENTION

According to the present disclosure, it is possible to more effectively prevent erroneous detection of an abnormality in a monitoring region due to an obstacle.

### BRIEF DESCRIPTION OF DRAWINGS

FIG. 1 is a block diagram showing an example of a system configuration of a monitoring system according to Embodiment 1;
FIG. 2 is a block diagram showing an example of an internal configuration of a camera according to Embodiment 1;
FIG. 3 is a block diagram showing an example of an internal configuration of each of an alarm reception device and a setting device according to Embodiment 1;
FIG. 4 shows an example of a detection region;
FIG. 5 shows an example of abnormality detection when a person detection linked mode is OFF;
FIG. 6 shows an example of abnormality detection when the person detection linked mode is ON;
FIG. 7 is a table showing an example of alarm generation when the person detection linked mode is ON/OFF;
FIG. 8 is a flowchart showing an example of operation procedures of the camera according to Embodiment 1; and
FIG. 9 is a flowchart showing the example of operation procedures of the camera according to Embodiment 1.

### DESCRIPTION OF EMBODIMENTS

Hereinafter, an embodiment that specifically discloses a detection method and a camera according to the present disclosure will be described in detail with reference to the attached drawings as appropriate. Detailed description more than necessary may be omitted. For example, detailed description of already well-known matters and redundant description of substantially the same configuration may be omitted. This is to avoid redundancy of following description and facilitate understanding of those skilled in the art. The attached drawings and following description are provided for those skilled in the art to sufficiently understand the present disclosure, and are not intended to limit the subject matter described in the claims.

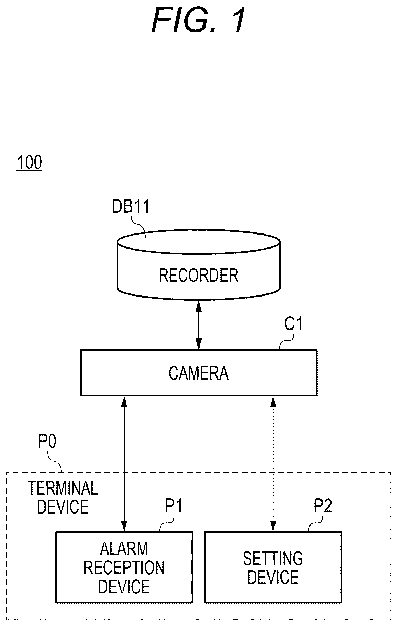

FIG. 1 is a block diagram showing an example of a system configuration of a monitoring system 100 according to Embodiment 1. The system configuration of the monitoring system 100 shown in FIG. 1 is an example, and the present disclosure is not limited thereto.

The monitoring system 100 monitors presence and absence of a prescribed event (for example, stockout of an object, abandonment of an object, and removal of an object) by a camera C1 equipped with artificial intelligence (AI). The monitoring system 100 captures an image of at least one region (hereinafter referred to as a "detection region") for detecting presence and absence of the prescribed event by the camera C1, and determines the prescribed event based on the captured image.

In following description of Embodiment 1, as an example of the prescribed event, a stockout of a product displayed on a product shelf provided in a detection region is detected as an abnormality.

The monitoring system 100 includes the camera C1, a recorder DB 11, an alarm reception device P1, and a setting device P2. The alarm reception device P1 and the setting device P2 may not be separate devices but one device (terminal device P0).

The camera C1 captures an image of a monitoring region including at least one detection region. The camera C1 detects an abnormality (stockout of a product) from each detection region appearing in the captured image using a second learning model. The second learning model referred to here is a learning model trained to be able to detect a product that is a detection target. When determining that an abnormality is detected in a detection region based on a detection result, the camera C1 generates an alarm indicating that an abnormality occurs in this detection region and transmits the alarm to the alarm reception device P1.

The recorder DB 11 is implemented by a storage device such as a hard disk drive (HDD) or a solid state drive (SSD). The recorder DB 11 records a captured image (captured video) captured by an imaging unit 13 in association with imaging time information.

The alarm reception device P1 is a device that can be viewed by a person (for example, a person who manages and replenishes a product) who monitors a stockout of a product (that is, a prescribed event), and outputs an alarm received from the camera C1.

The setting device P2 receives various settings of, for example, a prescribed event that is a detection target detected by the camera C1, at least one detection region for detecting the detection target by the camera C1, and an alarm trigger condition. The setting device P2 generates setting information based on the received various settings and transmits the setting information to the camera C1. The camera C1 executes various settings based on the setting information.

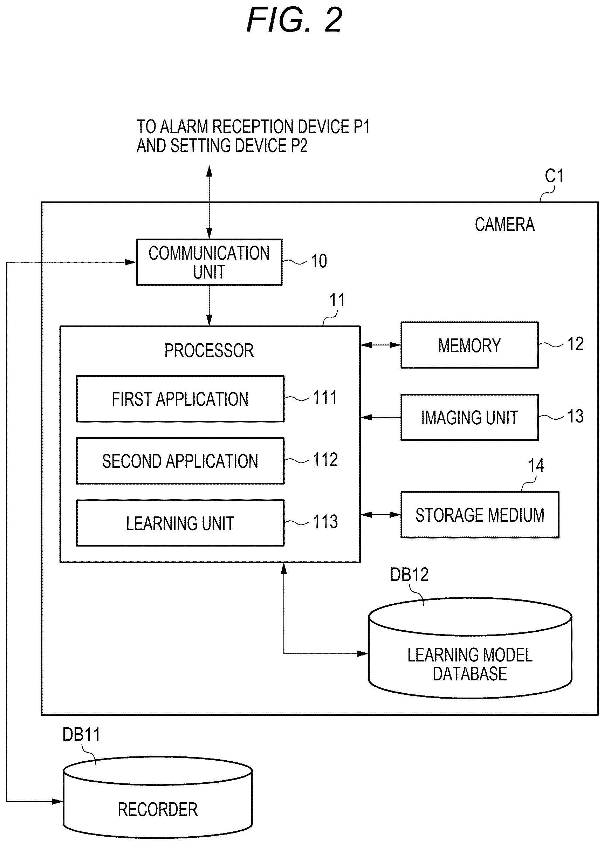

Next, an example of an internal configuration of the camera C1 will be described with reference to FIG. 2. FIG. 2 is a block diagram showing the example of the internal configuration of the camera C1 according to Embodiment 1.

The camera C1 includes a communication unit 10, a processor 11, a memory 12, the imaging unit 13, a storage medium 14, and a learning model database DB 12.

The communication unit 10 is implemented by a so-called hardware interface (I/F), a software I/F, and the like. The communication unit 10 transmits and receives data to and from each of the recorder DB 11, the alarm reception device P1, and the setting device P2. The communication unit 10 outputs various data received from the setting device P2 to the processor 11. The communication unit 10 transmits a captured image (captured video) output from the processor 11 to the recorder DB 11. The communication unit 10 transmits various data output from the processor 11 to the alarm reception device P1 or the setting device P2.

The processor 11, as an example of a measurement unit and a control unit, is a central processing unit (CPU), a graphics processing unit (GPU), or a field programmable gate array (FPGA). The processor 11 executes various processing and control in cooperation with the memory 12. Specifically, the processor 11 refers to programs and data held in the memory 12 and executes the programs to implement various functions of a first application 111, a second application 112, a learning unit 113, and the like.

The processor 11 executes ON/OFF control of the first application 111 based on information on various settings received from the setting device P2.

The first application 111, as an example of a first detection unit, implements an object detection function of detecting a non-detection target (for example, a person, a four-wheeled vehicle, and a two-wheeled vehicle) from a captured image using a first learning model. In Embodiment 1, the first application 111 has a person detection function as an example of the object detection function and detects a person. When controlled to be ON by the processor 11, the first application 111 detects a person from a captured image captured by the imaging unit 13 using the first learning model. The first application 111 generates a person detection result including information on a region (hereinafter, referred to as a "person detection region") in which a detected person appears, and outputs the person detection result to the second application 112.

The second application 112, as an example of a second detection unit, implements an abnormality detection function of detecting an abnormal state as a prescribed event from each detection region using a second learning model. The second application 112 according to Embodiment 1 can implement an abnormality detection function of detecting a state in which a product is out of stock as "abnormal". Alternatively, the second application 112 may implement a normality detection function of detecting a state in which a product is in stock as "normal".

When the first application 111 is OFF, the second application 112 uses the second learning model to detect, for each detection region, a region (hereinafter referred to as an "abnormality detection region") in which an abnormality (stockout of a product) occurs from a captured image captured by the imaging unit 13. When determining that an abnormality is detected in a detection region, the second application 112 starts measuring (counting) duration (hereinafter, referred to as "abnormality alarm duration") of an abnormal state corresponding to this detection region from a timing when the abnormality is detected. At a timing when determining that no abnormality is detected from the detection region, the second application 112 ends the measurement of the abnormality alarm duration corresponding to the detection region and resets the measured current abnormality alarm duration.

When determining that abnormality alarm duration of a detection region is equal to or longer than a prescribed time, which is an alarm trigger condition, the second application 112 generates an alarm notifying an abnormality of this detection region and transmits the alarm to the alarm reception device P1.

When the first application 111 is ON, the second application 112 acquires person detection information output from the first application 111. The second application 112 detects an abnormality detection region included in each detection region of a captured image captured by the imaging unit 13 using the second learning model. The second application 112 calculates a ratio of an abnormality detection region to a detection region for each detection region in which an abnormality is detected. The second application 112 further calculates a ratio of a person detection region included in person detection information to a detection region for each detection region in which an abnormality is detected.

The second application 112 executes processing such as measurement start, temporary stop, measurement restart, and measurement end (reset) of abnormality alarm duration based on the calculated ratio of the abnormality detection region and the ratio of the person detection region. When determining that measured abnormality alarm duration of a detection region is equal to or longer than a prescribed time, which is an alarm trigger condition, the second application 112 generates an alarm notifying an abnormality of this detection region and transmits the alarm to the alarm reception device P1.

The learning unit 113 periodically executes generation (retraining) of the second learning model using a captured image captured by the imaging unit 13, a captured image including an abnormality detection region, and the like as training data. The learning unit 113 may periodically execute generation (retraining) of the first learning model based on a captured image captured by the imaging unit 13 and a captured image including a person detection region. The learning unit 113 outputs training data and the second learning model to the learning model database DB 12 to be recorded.

The memory 12 includes, for example, a random access memory (RAM) that is a working memory used when the processor 11 executes various processing, and a read only memory (ROM) that stores data and programs that define operations of the processor 11. The memory 12 may include a storage device such as an SSD or an HDD. The RAM temporarily stores data or information generated or acquired by the processor 11. The programs that define the operations of the processor 11 are written in the ROM. The memory 12 stores, for example, information on each detection region and information on an alarm trigger condition for each detection region as various setting information. The alarm trigger condition referred to here includes a first threshold and a second threshold used for executing measurement start, measurement restart, temporary stop, measurement end (reset), and the like of abnormality alarm duration, a prescribed time set for the abnormality alarm duration and used for determining whether to trigger an alarm, and the like.

The imaging unit 13 includes at least a lens (not shown) and an image sensor (not shown). The image sensor is a solid imaging element such as a charged coupled device (CCD) or a complementary metal oxide semiconductor (CMOS). The image sensor converts an optical image formed on an imaging surface into an electric signal. The imaging unit 13 outputs a captured image to the processor 11.

The storage medium 14 is implemented by an external storage medium such as an SD card (registered trademark), a micro SD (registered trademark), and a USB memory (registered trademark), or a storage device such as an HDD and an SSD. The storage medium 14 stores a captured image captured by the imaging unit 13, a person detection region, and an abnormality detection region in association with each other.

The learning model database DB 12 is implemented by a storage device such as an HDD or an SSD. The learning model database DB 12 registers (stores) the first learning model and the second learning model received from an external storage medium or the setting device P2. The learning model database DB 12 registers (stores) the first learning model and the second learning model retrained by the learning unit 113.

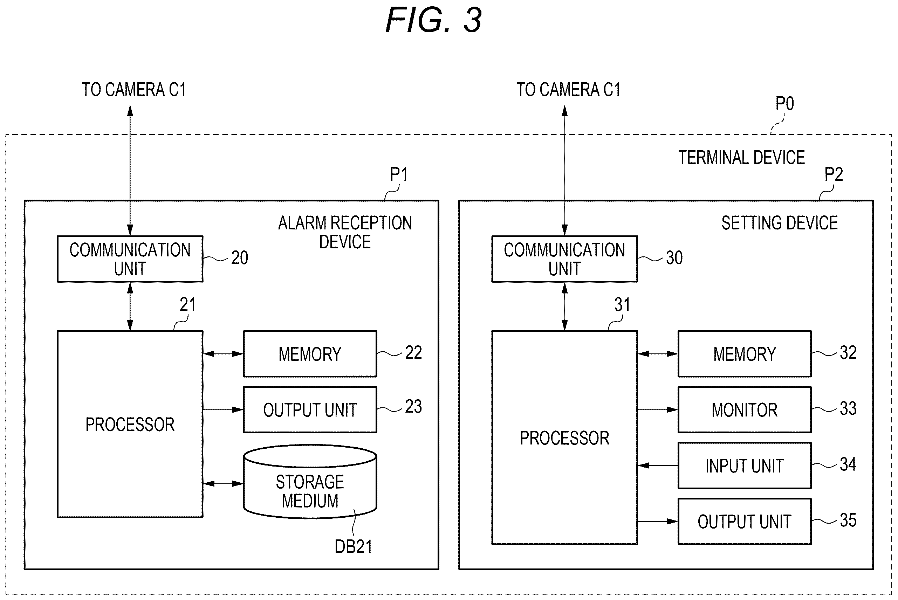

Next, an example of an internal configuration of each of the alarm reception device P1 and the setting device P2 will be described with reference to FIG. 3. FIG. 3 is a block diagram showing the example of the internal configuration of each of the alarm reception device P1 and the setting device P2 according to Embodiment 1.

The alarm reception device P1 is implemented by, for example, a smartphone, a tablet terminal, a PC, a notebook PC, and a recorder. The alarm reception device P1 includes a communication unit 20, a processor 21, a memory 22, an output unit 23, and a storage medium DB 21.

The communication unit 20 is implemented by a so-called hardware I/F, a software I/F, and the like. The communication unit 20 transmits and receives data to and from the camera C1. The communication unit 20 outputs an alarm received from the camera C1 to the processor 21.

The processor 21 is, for example, a CPU, a GPU, or an FPGA. The processor 21 executes various processing and control in cooperation with the memory 22. Specifically, the processor 21 implements various functions by referring to programs and data stored in the memory 22 and executing the programs.

The processor 21 acquires the alarm received from the camera C1. The processor 21 generates a screen, an audio signal, and the like for notifying the acquired alarm, and displays the screen on or outputs audio to the output unit 23.

The memory 22 includes, for example, a RAM that is a working memory used when the processor 21 executes various processing, and a ROM that stores data and programs that define operations of the processor 21. The memory 22 may include a storage device such as an SSD or an HDD. The RAM temporarily stores data or information generated or acquired by the processor 21. The programs that define the operations of the processor 21 are written in the ROM.

The output unit 23 is implemented by a display such as a liquid crystal display (LCD) or an organic electroluminescence (EL), a speaker, and the like, and outputs an alarm.

The storage medium DB 21 is implemented by a storage device such as an HDD or an SSD. When the alarm received from the camera C1 includes image data and video data captured at a timing of abnormality detection, the storage medium DB 21 may store the image data and video data. When receiving a recorded video from the camera C1, the storage medium DB 21 may store the recorded video. The storage medium DB 21 accumulates and stores a triggered alarm as an alarm trigger history for each detection region.

The setting device P2 is a device that can receive a user operation, and is implemented by a smartphone, a tablet terminal, a PC, a notebook PC, and the like. The setting device P2 includes a communication unit 30, a processor 31, a memory 32, an input unit 34, and an output unit 35.

The communication unit 30 is implemented by a so-called hardware I/F, a software I/F, and the like. The communication unit 30 transmits and receives data to and from the camera C1. The communication unit 30 transmits various types of setting information output from the processor 31 to the camera C1.

The processor 31 is, for example, a CPU, a GPU, or an FPGA. The processor 31 executes various processing and control in cooperation with the memory 32. Specifically, the processor 31 implements various functions by referring to programs and data stored in the memory 32 and executing the programs.

The memory 32 includes, for example, a RAM that is a working memory used when the processor 31 executes various processing, and a ROM that stores data and programs that define operations of the processor 31. The memory 32 may include a storage device such as an SSD or an HDD. The RAM temporarily stores data or information generated or acquired by the processor 31. The programs that define the operations of the processor 31 are written in the ROM.

The monitor 33 is a display such as an LCD or an organic EL. The monitor 33 displays a screen that receives various settings. When the setting device P2 acquires an alarm from the camera C1, the monitor 33 may display the screen based on the acquired alarm.

The input unit 34 is a user interface such as a touch panel, a button, a keyboard, and a mouse. The input unit 34 receives a user operation related to various settings, converts the user operation into an electric signal (control command), and outputs the electric signal to the processor 31. When implemented by a touch panel, the input unit 34 may be integrated with the monitor 33.

The output unit 35 is implemented by, for example, a speaker. When acquiring an alarm from the camera C1, the output unit 35 corresponds to the acquired alarm and outputs an audio signal for notifying the alarm. The audio signal may be generated by the processor 31.

The terminal device P0 indicates a device when the alarm reception device P1 and the setting device P2 are integrated, and can implement various functions implemented by the alarm reception device P1 and various functions implemented by the setting device P2.

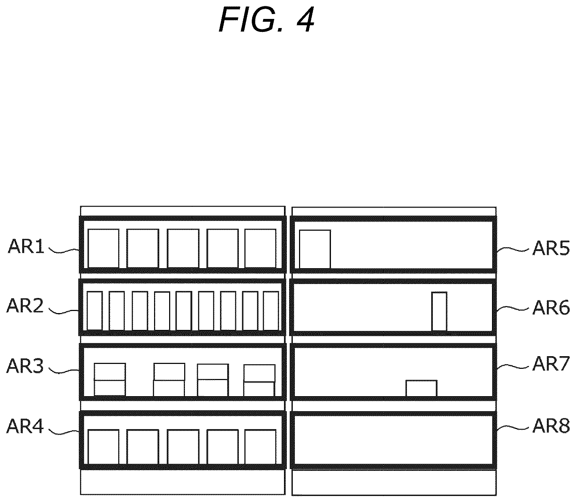

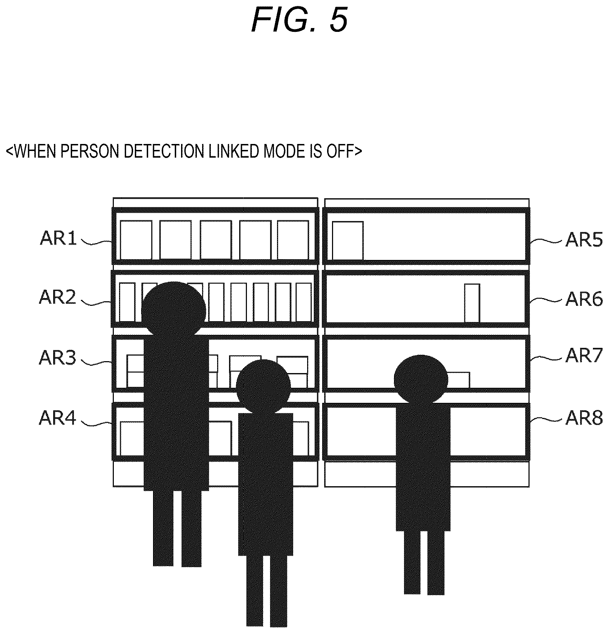

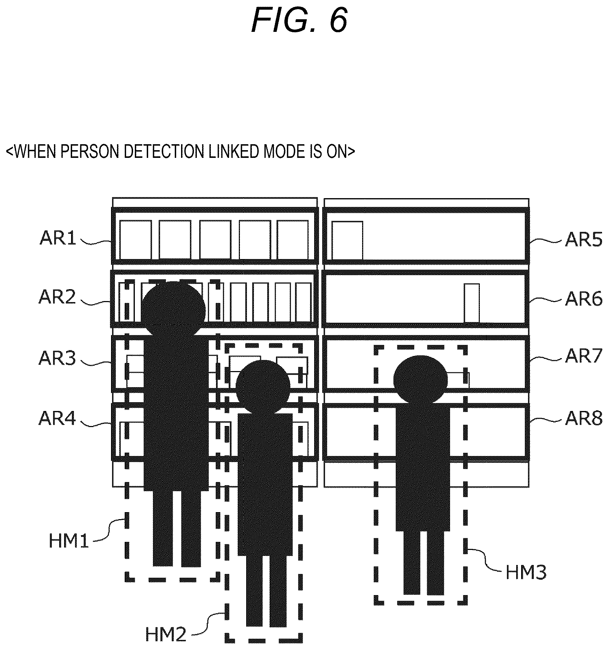

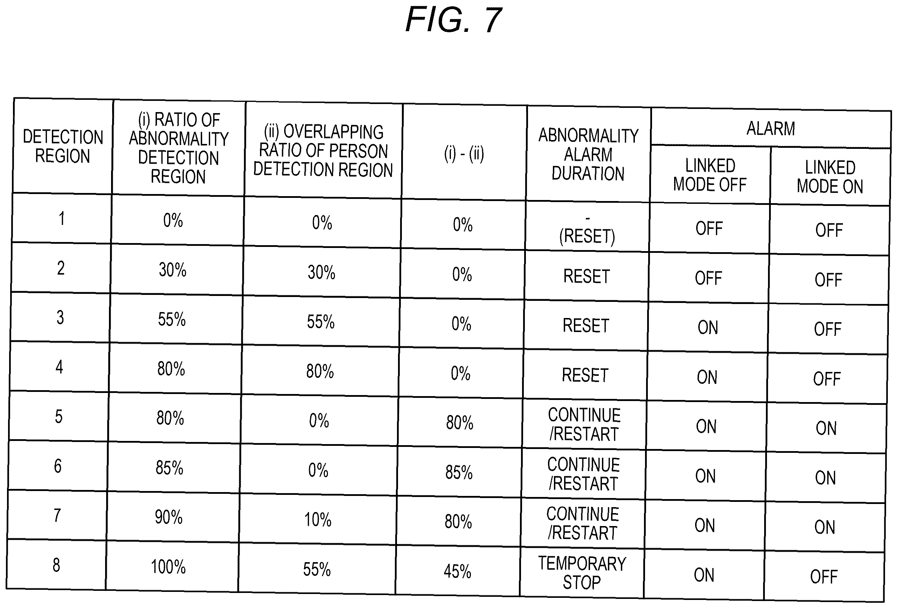

Next, an alarm trigger method when a person detection linked mode is ON and OFF will be described with reference to FIGS. 4 to 7. FIG. 4 shows an example of a detection region. FIG. 5 shows an example of abnormality detection when the person detection linked mode is OFF. FIG. 6 shows an example of abnormality detection when the person detection linked mode is ON. FIG. 7 is a table showing an example of alarm generation when the person detection linked mode is ON/OFF.

The camera C1 captures an image of a region including at least one detection region set in advance. In the examples shown in FIGS. 4 to 7, the camera C1 captures an image of a region including eight detection regions AR1, AR2, AR3, AR4, AR5, AR6, AR7, and AR8. In the examples shown in FIGS. 4 to 7, when determining that a ratio of an abnormality detection region is 50% or more (that is, the first threshold = 50%), the camera C1 measures abnormality alarm duration of a detection region in which the ratio of the abnormality detection region is 50% or more. When determining that the abnormality alarm duration is equal to or longer than a prescribed time, the camera C1 generates an alarm including information on a detection region in which the abnormality alarm duration is equal to or longer than the prescribed time, and transmits the alarm to the alarm reception device P1.

First, alarm trigger processing of the processor 11 when a person detection function is OFF will be described with reference to FIG. 5.

### <When Person Detection Linked Mode Is OFF>

When the person detection function is OFF, the processor 11 starts detecting an abnormality (stockout of a product) in each detection region in a mode in which the person detection function executed by the first application 111 and the abnormality detection function executed by the second application 112 are not linked (that is, "person detection linked mode is OFF", which is an example of a second mode). Here, the second learning model used by the second application 112 is a model trained to recognize, as an abnormality detection region, a region (pixels) in which an object (a product, a person, or the like) does not appear and a product is out of stock in a detection region.

The processor 11 detects an abnormality detection region in which an abnormality (stockout of a product) occurs in each of the detection regions AR1 to AR8 by the second application 112. The processor 11 calculates a ratio of the abnormality detection region to the detection region in each of the detection regions AR1 to AR8 based on the number of pixels in the abnormality detection region relative to the number of pixels in the entire detection region.

In the examples shown in FIGS. 5 and 6, the processor 11 calculates that the ratio of the abnormality detection region to the detection region AR1 is 0% (zero), the ratio of the abnormality detection region to the detection region AR2 is 30%, the ratio of the abnormality detection region to the detection region AR3 is 55%, the ratio of the abnormality detection region to each of the detection regions AR4 and AR5 is 80%, the ratio of the abnormality detection region to the detection region AR6 is 85%, the ratio of the abnormality detection region to the detection region AR7 is 90%, and the ratio of the abnormality detection region to the detection region AR8 is 100%.

In the example shown in FIG. 5, the processor 11 starts measurement of abnormality alarm duration in each of the detection regions AR3 to AR8 in which the abnormality detection region is detected. The processor 11 determines whether the abnormality alarm duration in each of the detection regions AR3 to AR8 is equal to or longer than a prescribed time. When determining that no abnormality detection region is detected, the processor 11 ends the measurement (counting) of the abnormality alarm duration corresponding to the detection region including no abnormality detection region, and resets the measured current abnormality alarm duration.

The processor 11 determines whether there is a detection region in which the measured abnormality alarm duration is equal to or longer than the prescribed time. When determining that there is a detection region in which the abnormality alarm duration is equal to or longer than the prescribed time, the processor 11 generates an alarm including information on the detection region and transmits the alarm to the alarm reception device P1. In the example shown in FIG. 5, the processor 11 generates an alarm indicating that an abnormality (stockout of a product) is detected in each of the detection regions AR3 to AR8, and transmits the alarm to the alarm reception device P1.

The information on the detection region referred to here may be information such as an identification number assigned to the detection region and a detection region name, and may be data such as a captured image in which the detection region is emphasized by a frame line or the like, a captured image including ratio information on the abnormality detection region corresponding to the detection region, and a captured video including a captured image at a time when the alarm is generated.

Next, alarm trigger processing of the processor 11 when the person detection function is ON will be described with reference to FIG. 6.

### <When Person Detection Linked Mode Is ON>

When the person detection function is ON, the processor 11 starts detecting an abnormality (stockout of a product) in each detection region in a mode in which the person detection function executed by the first application 111 and the abnormality detection function executed by the second application 112 are linked (that is, "person detection linked mode is ON", which is an example of a first mode).

The processor 11 detects person detection regions HM1, HM2, and HM3 in which a person appears in a captured image by the first application 111. The processor 11 calculates a ratio of a person detection region to a detection region in each of the detection regions AR1 to AR8 based on the number of pixels in each of the person detection regions HM1 to HM3 relative to the number of pixels in the entire detection region.

The processor 11 detects an abnormality detection region in which an abnormality (stockout of a product) occurs in each of the detection regions AR1 to AR8 by the second application 112. The processor 11 calculates a ratio of the abnormality detection region to the detection region in each of the detection regions AR1 to AR8 based on the number of pixels in the abnormality detection region relative to the number of pixels in the entire detection region.

The processor 11 calculates, among pixels included in the detected abnormality detection region, the number of overlapping pixels which overlap pixels included in the person detection region. The processor 11 subtracts a ratio of the number of overlapping pixels in the detection region from the ratio of the abnormality detection region in the same detection region, and determines whether the ratio of the abnormality detection region after the subtraction to the detection region is equal to or greater than the first threshold (= 50%).

In FIGS. 6 and 7, the first threshold is 50% and the second threshold is 40% as an example, and it is needless to say that values of the first threshold and the second threshold are not limited thereto. Each of the first threshold and the second threshold may be set for each detection region. Accordingly, for example, the processor 11 can improve an abnormality detection accuracy in each of the detection regions AR1 and AR5 in a vicinity of a ceiling where a person is less likely to enter and be detected, and in each of the detection regions AR3, AR4, AR7, and AR8 where a person is likely to enter and be detected. The second threshold may be the same value (ratio) as the first threshold, and may be a value (ratio) smaller or larger than the first threshold.

In the example shown in FIG. 6, the processor 11 determines that the ratio of the abnormality detection region after the subtraction is equal to or greater than the first threshold in each of the detection regions AR5 to AR7. The processor 11 starts, continues, or restarts the measurement of the abnormality alarm duration based on whether the current abnormality alarm duration of each of the detection regions AR5 to AR7 is being measured.

Specifically, when the abnormality alarm duration is not being measured, that is, 0 (zero), the processor 11 starts the measurement of the abnormality alarm duration. When the abnormality alarm duration is being measured, the processor 11 continues the measurement of the abnormality alarm duration. When the measurement of the abnormality alarm duration is temporarily stopped, the processor 11 restarts the measurement of the abnormality alarm duration.

The processor 11 further determines whether the ratio of the abnormality detection region before the subtraction is equal to or greater than the second threshold (= 40%) for the detection region AR8 in which an abnormality is detected and it is determined that the ratio of the abnormality detection region after the subtraction is neither equal to nor greater than the first threshold (= 50%).

In the example shown in FIG. 6, the processor 11 determines that the abnormality detected in the detection region AR8 may be erroneous detection, and temporarily stops the measurement of the abnormality alarm duration in the detection region AR8.

The processor 11 determines whether there is a detection region in which the measured abnormality alarm duration is equal to or longer than the prescribed time. When there is a detection region in which the measured abnormality alarm duration is determined to be equal to or longer than the prescribed time, the processor 11 generates an alarm including information on the detection region and transmits the alarm to the alarm reception device P1.

In the example shown in FIG. 6, in the detection regions AR5 to AR7 in which the abnormality alarm duration is being measured, when determining that the abnormality alarm duration corresponding to a detection region is equal to or longer than the prescribed time, the processor 11 generates an alarm indicating that an abnormality (stockout of a product) is detected in this detection region, and transmits the alarm to the alarm reception device P1.

The information on the detection region referred to here includes at least identification information (for example, an ID, and a name assigned to the detection region) allowing the detection region to be identified. The information on the detection region may further include information on a ratio of the abnormality detection region and a captured image, a captured video, and the like captured at a timing when it is determined that the abnormality alarm duration is equal to or longer than the prescribed time, and may further include a captured image or a captured video in which a red frame line is superimposed on a detection region in which the abnormality alarm duration is determined to be equal to or longer than the prescribed time and a yellow frame line is superimposed on a detection region in which the abnormality alarm duration is determined to be shorter than the prescribed time or the abnormality alarm duration is temporarily stopped. The information on the detection region may further include data related to a detection region in which an alarm is not triggered and the abnormality alarm duration is temporarily stopped when the person detection linked mode is ON.

As described above, the camera C1 according to Embodiment 1 can more effectively prevent erroneous detection of an abnormality due to an obstacle (a person in the example described above) entering a detection region by changing an alarm trigger condition by turning on/off a person detection linked mode.

Since the camera C1 can determine measurement processing of abnormality alarm duration by simply subtracting a ratio of an overlapping region from a ratio of an abnormality detection region relative to a detection region, it is possible to prevent an increase in a calculation processing amount of the processor 11 and to reduce a processing load due to calculation processing and shorten time required for the calculation processing. That is, the camera C1 can more efficiently determine whether an abnormality (stockout of a product) occurs in a detection region.

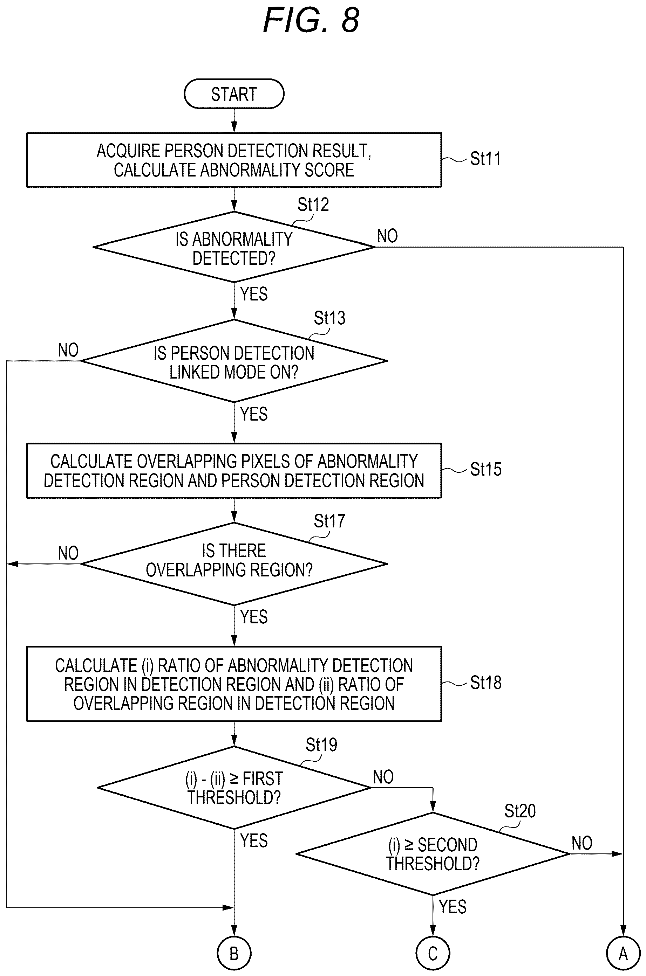

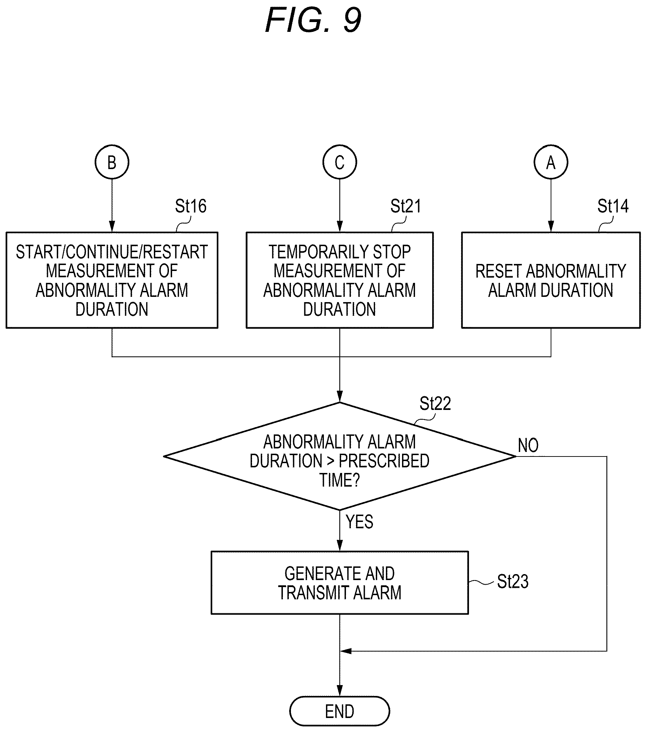

Next, abnormality detection procedures executed by the camera C1 will be described with reference to FIGS. 8 and 9. FIG. 8 is a flowchart showing an example of operation procedures of the camera C1 according to Embodiment 1. FIG. 9 is a flowchart showing the example of operation procedures of the camera C1 according to Embodiment 1.

The second application 112 of the camera C1 acquires a captured image output from the imaging unit 13. The second application 112 further acquires, from the first application 111, information (for example, information on each of the person detection regions HM1 to HM3 shown in FIG. 6) on pixels in which a person is detected as a person detection result (St11). The second application 112 uses the second learning model to calculate an abnormality score indicating a probability of an abnormality (stockout of a product) for all pixels included in each detection region in the captured image (St11). When the person detection linked mode is OFF, the second application 112 may omit the processing of acquiring the person detection result from the first application 111.

The second application 112 determines that pixels having an abnormality score equal to or greater than a prescribed value are pixels in which an abnormality (stockout of a product) occurs. The second application 112 determines whether there are pixels (region) having an abnormality score equal to or greater than the prescribed value in at least one detection region for each detection region (St12).

In the processing of step St12, when determining that there are pixels (region) having an abnormality score equal to or greater than the prescribed value in at least one detection region (St12, YES), the second application 112 detects the pixels (region) having the abnormality score equal to or greater than the prescribed value as an abnormality detection region. The second application 112 further determines whether the current person detection linked mode is ON (St13).

On the other hand, in the processing of step St12, when determining that there are no pixels (region) having an abnormality score equal to or greater than the prescribed value in all detection regions (St12, NO), the second application 112 ends the measurement of the abnormality alarm duration of all the detection regions and resets the measured abnormality alarm duration (St14).

In the processing of step St13, when determining that the current person detection linked mode is ON (St13, YES), the second application 112 calculates the number of pixels (region) in which positions of pixels included in the abnormality detection region match positions of pixels included in the person detection region, that is, the abnormality detection region overlaps the person detection region, for each detection region (St15).

On the other hand, in the processing of step St13, when determining that the current person detection linked mode is not ON (St13, NO), the second application 112 starts, continues, or restarts measurement of abnormality alarm duration time corresponding to a detection region in which pixels (region) having an abnormality score equal to or greater than the prescribed value are detected (St16).

The second application 112 determines whether there is an overlapping region where the abnormality detection region overlaps the person detection region based on the calculated number of overlapping pixels (St17).

When determining that there is an overlapping region in the processing of step St17 (St17, YES), the second application 112 calculates a ratio of the abnormality detection region and a ratio of overlapping pixels in the same detection region (St18).

On the other hand, when determining that there is no overlapping region in the processing of step St17 (St17, NO), the second application 112 starts, continues, or restarts the measurement of the abnormality alarm duration time corresponding to the detection region (St16).

The second application 112 subtracts the ratio of the overlapping region from the ratio of the abnormality detection region relative to the same detection region, and determines whether the ratio of the abnormality detection region after the subtraction is equal to or greater than the first threshold (St19).

When determining in the processing of step St19 that the ratio of the abnormality detection region after the subtraction is equal to or greater than the first threshold (St19, YES), the second application 112 starts, continues, or restarts the measurement of the abnormality alarm duration time corresponding to the detection region (St16).

On the other hand, when determining in the processing of step St19 that the ratio of the abnormality detection region after the subtraction is neither equal to nor greater than the first threshold (St19, NO), the second application 112 further determines whether the ratio of the abnormality detection region before the subtraction is equal to or greater than the second threshold (St20).

When determining in the processing of step St20 that the ratio of the abnormality detection region before the subtraction is equal to or greater than the second threshold (St20, YES), the second application 112 temporarily stops the measurement of the abnormality alarm duration time corresponding to the detection region (St21).

On the other hand, when determining that the ratio of the abnormality detection region before the subtraction is neither equal to nor greater than the second threshold in the processing of step St20 (St20, NO), the second application 112 ends the measurement of the abnormality alarm duration time corresponding to the detection region and resets the measured abnormality alarm duration (St14).

The second application 112 determines whether the measured abnormality alarm duration is equal to or longer than the prescribed time for each detection region (St22).

When determining in the processing of step St22 that the abnormality alarm duration measured in at least one detection region is equal to or longer than the prescribed time (St22, YES), the second application 112 generates an alarm including information on the detection region in which the abnormality alarm duration is equal to or longer than the prescribed time, and transmits the alarm to the alarm reception device P1 (St23).

On the other hand, when determining in the processing of step St22 that the abnormality alarm duration measured in all detection regions is neither equal to nor longer than the prescribed time (St22, NO), the second application 112 ends the operation procedures shown in FIGS. 8 and 9.

As described above, the camera C1 according to Embodiment 1 can more effectively prevent erroneous detection of an abnormality due to an obstacle (a person in the example described above) entering a detection region by changing an alarm trigger condition by turning on/off a person detection linked mode.

As described above, a detection method executed by the camera C1 that captures an image of at least one of the detection regions AR1 to AR8 includes capturing an image of a region including the detection regions AR1 to AR8, detecting a person (example of a non-detection target) and an abnormality (example of a detection target) appearing in the captured image, measuring abnormality alarm duration (example of detection duration) of the abnormality in the detection regions AR1 to AR8 based on a person detection region (example of non-detection pixels) in which the person is detected and an abnormality detection region (example of detection pixels) in which the abnormality is detected, and generating and outputting an alarm indicating that the detection target is detected in the detection region when the abnormality alarm duration is determined to be equal to or longer than a prescribed time.

Accordingly, the camera C1 according to Embodiment 1 can more effectively prevent erroneous detection of an abnormality in a detection region and an erroneous trigger of an alarm by individually detecting the abnormality as a detection target and a person as a non-detection target.

In addition, the camera C1 according to Embodiment 1 calculates the number of overlapping pixels (example of the number of overlapping pixels) in which positions of the abnormality detection region and positions of the person detection region overlap in the same detection region, calculates a ratio of the abnormality detection region to the same detection region and a ratio of an overlapping region (example of the overlapping pixels) to the same detection region based on the number of overlapping pixels, and measures the abnormality alarm duration corresponding to the detection region based on the ratio of the abnormality detection region and the ratio of the overlapping region. Accordingly, the camera C1 according to Embodiment 1 can determine a probability of an abnormality detected in a detection region based on a ratio of an abnormality detection region to the detection region and a ratio of an overlapping region in which a person detection region (non-detection target) is detected in the abnormality detection region, and thus can more effectively prevent erroneous detection of the abnormality in the detection region and an erroneous trigger of an alarm.

In addition, the camera C1 according to Embodiment 1 subtracts the ratio of the overlapping region from the ratio of the abnormality detection region, and measures the abnormality alarm duration corresponding to the detection region when the ratio of the abnormality detection region after the subtraction is determined to be equal to or greater than a first threshold. Accordingly, the camera C1 according to Embodiment 1 can determine that an abnormality is detected in a detection region only when determining that a probability of the abnormality detected in the detection region is equal to or higher than a prescribed probability indicated by a first threshold using a ratio of an abnormality detection region excluding an overlapping region in which a person detection region (non-detection target) is detected. Therefore, the camera C1 can more effectively prevent erroneous detection of an abnormality in a detection region and an erroneous trigger of an alarm.

Further, the camera C1 according to Embodiment 1 temporarily stops or ends the measurement of the abnormality alarm duration corresponding to the detection region when the ratio of the abnormality detection region after the subtraction is determined to be neither equal to nor greater than the first threshold. Accordingly, using the ratio of the abnormality detection region excluding the overlapping region in which the person detection region (non-detection target) is detected, the camera C1 according to Embodiment 1 can temporarily suspend determination of a detection state of an abnormality in a detection region by temporarily stopping abnormality alarm duration or reset the detection state of the abnormality in the detection region by ending the abnormality alarm duration in a case where a probability of the abnormality detected in the detection region is less than the prescribed probability indicated by the first threshold and at least a part of the overlapping region is not abnormal and a case where it is determined that an abnormality requiring a trigger of an alarm may not occur in the detection region. Therefore, the camera C1 can more effectively prevent erroneous detection of an abnormality and an erroneous trigger of an alarm.

The camera C1 according to Embodiment 1 further determines whether the ratio of the abnormality detection region before the subtraction is equal to or greater than a second threshold when the ratio of the abnormality detection region after the subtraction is determined to be neither equal to nor greater than the first threshold, temporarily stops the measurement of the abnormality alarm duration corresponding to the detection region when the ratio of the abnormality detection region before the subtraction is determined to be equal to or greater than the second threshold, and ends the measurement of the abnormality alarm duration corresponding to the detection region when the ratio of the abnormality detection region before the subtraction is determined to be neither equal to nor greater than the second threshold. Accordingly, when the probability of the abnormality detected in the detection region is determined to be less than the prescribed probability indicated by the first threshold, the camera C1 according to Embodiment 1 can determine whether an abnormality requiring a trigger of an alarm occurs in the detection region regardless of a probability that an overlapping region is abnormal by comparing a second threshold with a ratio of an abnormality detection region itself. Therefore, the camera C1 can temporarily suspend determination of a detection state of the abnormality in the detection region by temporarily stopping abnormality alarm duration when the probability of the abnormality detected in the detection region is equal to or higher than a prescribed probability indicated by the second threshold, and can reset the detection state of the abnormality in the detection region by ending the abnormality alarm duration when the probability of the abnormality detected in the detection region is lower than the prescribed probability indicated by the second threshold.

In addition, the camera C1 according to Embodiment 1 recalculates the ratio of the abnormality detection region after the subtraction based on a captured image captured after the measurement of the abnormality alarm duration corresponding to the detection region is temporarily stopped, and restarts the measurement of the temporarily stopped abnormality alarm duration when the recalculated ratio of the abnormality detection region after the subtraction is determined to be equal to or greater than the first threshold in the detection region in which the measurement of the abnormality alarm duration is temporarily stopped. Accordingly, when the probability of the abnormality detected in the detection region is determined to have changed from the prescribed probability indicated by the second threshold to the prescribed probability indicated by the first threshold or more, the camera C1 according to Embodiment 1 can prevent a detection state of the abnormality in the detection region from being reset by restarting the abnormality alarm duration.

The first threshold and the second threshold of the camera C1 according to Embodiment 1 are set for each detection region. Accordingly, the camera C1 according to Embodiment 1 can improve an abnormality detection accuracy in, for example, a detection region (for example, detection regions AR1 and AR5) in a vicinity of a ceiling where a person is less likely to enter and be detected and in a detection region (for example, detection regions AR3, AR4, AR7, and AR8) where a person is likely to enter and be detected, and can more effectively prevent erroneous detection of an abnormality and an erroneous trigger of an alarm in a detection region.

In addition, the camera C1 according to Embodiment 1 is switchable between a first mode (person detection linked mode ON) of detecting the non-detection target and a second mode (person detection linked mode OFF) of not detecting the non-detection target, measures, in the first mode, the abnormality alarm duration in the detection region based on the person detection region and the abnormality detection region and generates and outputs the alarm when the abnormality alarm duration is determined to be equal to or longer than the prescribed time, and measures, in the second mode, the abnormality alarm duration corresponding to the detection region in which the abnormality detection region (abnormal pixels) is detected and generates and outputs the alarm when the abnormality alarm duration is determined to be equal to or longer than the prescribed time. Accordingly, the camera C1 according to Embodiment 1 can enable the first mode only at a timing when it is desired to prevent erroneous detection of an abnormality and an erroneous trigger of an alarm such as a date and time when the non-detection target enters the detection region and a date and time when erroneous detection of an abnormality or an erroneous trigger of an alarm occurs due to the entry of the non-detection target. Therefore, by switching between the first mode and the second mode, the camera C1 can reduce a processing load of various processing necessary for detecting an abnormality and triggering an alarm, and prevent an increase in power consumption for executing these various processing.

As described above, the camera C1 according to Embodiment 1 includes the imaging unit 13 that captures an image of a region including at least one of the detection regions AR1 to AR8, the first application 111 (example of a first detection unit) that detects a person (example of a non-detection target) appearing in the captured image, the second application 112 (example of a second detection unit) that detects an abnormality (example of a detection target) appearing in the captured image, the processor 11 (example of a measurement unit) that measures abnormality alarm duration of the abnormality in the detection region based on a person detection region (example of non-detection pixels) in which the person is detected and an abnormality detection region (example of detection pixels) in which the abnormality is detected, and the processor 11 (example of a control unit) that generates and outputs an alarm indicating that the abnormality is detected in the detection region when the abnormality alarm duration is determined to be equal to or longer than a prescribed time.

Accordingly, the camera C1 according to Embodiment 1 can more effectively prevent erroneous detection of an abnormality in a detection region and an erroneous trigger of an alarm by individually detecting the abnormality as a detection target and a person as a non-detection target.

Although an embodiment has been described above with reference to drawings, the present disclosure is not limited to this example. It is apparent to a person skilled in the art that various changes, corrections, substitutions, additions, deletions, and equivalents can be conceived within the scope of the claims, and it is understood that such modifications also belong to the technical scope of the present disclosure. Components in the above described embodiment may be freely combined without departing from the gist of the invention.

The present application is based on a Japanese patent application (JP2023-008169A) filed on January 23, 2023, and contents thereof are incorporated herein by reference.

### INDUSTRIAL APPLICABILITY

The present disclosure is useful as a detection method and a camera that more effectively prevent erroneous detection of an abnormality in a monitoring region due to an obstacle.

### REFERENCE SIGNS LIST

10, 20, 30 communication unit
11, 21, 31 processor
12, 22, 32 memory
13 imaging unit
14, DB 21 storage medium
23 output unit
100 monitoring system
AR1, AR2, AR3, AR4, AR5, AR6, AR7, AR8 detection region
C1 camera
HM1, HM2, HM3 person detection region
P1 alarm reception device

## Claims

1. A detection method executed by a camera that captures an image of at least one detection region, the detection method comprising:
capturing an image of a region including the detection region;
detecting a non-detection target and a detection target appearing in the captured image;
measuring detection duration of the detection target in the detection region based on non-detection pixels in which the non-detection target is detected and detection pixels in which the detection target is detected; and
generating and outputting an alarm indicating that the detection target is detected in the detection region when the detection duration is determined to be equal to or longer than a prescribed time.

2. The detection method according to claim 1, further comprising:
calculating a number of overlapping pixels in which positions of the detection pixels and positions of the non-detection pixels overlap in the same detection region;
calculating a ratio of the detection pixels to the same detection region and a ratio of the overlapping pixels to the same detection region based on the number of overlapping pixels; and
measuring the detection duration corresponding to the detection region based on the ratio of the detection pixels and the ratio of the overlapping pixels.

3. The detection method according to claim 2, further comprising:
subtracting the ratio of the overlapping pixels from the ratio of the detection pixels; and
measuring the detection duration corresponding to the detection region when the ratio of the detection pixels after the subtraction is determined to be equal to or greater than a first threshold.

4. The detection method according to claim 3, further comprising:
temporarily stopping or ending the measurement of the detection duration corresponding to the detection region when the ratio of the detection pixels after the subtraction is determined to be neither equal to nor greater than the first threshold.

5. The detection method according to claim 3, further comprising:
further determining whether the ratio of the detection pixels before the subtraction is equal to or greater than a second threshold when the ratio of the detection pixels after the subtraction is determined to be neither equal to nor greater than the first threshold;
temporarily stopping the measurement of the detection duration corresponding to the detection region when the ratio of the detection pixels before the subtraction is determined to be equal to or greater than the second threshold; and
ending the measurement of the detection duration corresponding to the detection region when the ratio of the detection pixels before the subtraction is determined to be neither equal to nor greater than the second threshold.

6. The detection method according to claim 5, further comprising:
recalculating the ratio of the detection pixels after the subtraction based on a captured image captured after the measurement of the detection duration corresponding to the detection region is temporarily stopped; and
restarting the measurement of the temporarily stopped detection duration when the recalculated ratio of the detection pixels after the subtraction is determined to be equal to or greater than the first threshold in the detection region in which the measurement of the detection duration is temporarily stopped.

7. The detection method according to claim 5, wherein
the first threshold and the second threshold are set for each detection region.

8. The detection method according to claim 1, wherein
the camera is switchable between a first mode of detecting the non-detection target and a second mode of not detecting the non-detection target,
the camera measures, in the first mode, the detection duration in the detection region based on the non-detection pixels and the detection pixels, and generates and outputs the alarm when the detection duration is determined to be equal to or longer than the prescribed time, and
the camera measures, in the second mode, the detection duration corresponding to the detection region in which the detection pixels are detected, and generates and outputs the alarm when the detection duration is determined to be equal to or longer than the prescribed time.

9. A camera comprising:
an imaging unit configured to capture an image of a region including at least one detection region;
a first detection unit configured to detect a non-detection target appearing in the captured image;
a second detection unit configured to detect a detection target appearing in the captured image;
a measurement unit configured to measure detection duration of the detection target in the detection region based on non-detection pixels in which the non-detection target is detected and detection pixels in which the detection target is detected; and
a control unit configured to generate and output an alarm indicating that the detection target is detected in the detection region when the detection duration is determined to be equal to or longer than a prescribed time.
